Europäisches Patentamt

European Patent Office

Office européen des brevets

(19)

(11) Publication number: **0 318 213**
**A2**

# (12) EUROPEAN PATENT APPLICATION

(21) Application number: **88310901.9**

(22) Date of filing: **18.11.88**

(51) Int. Cl.4: **G06K 7/08**

(30) Priority: **21.11.87 GB 8727324**

(43) Date of publication of application:
**31.05.89 Bulletin 89/22**

(84) Designated Contracting States:
**AT BE CH DE ES FR GB GR IT LI LU NL SE**

(71) Applicant: **MAINMET LIMITED**
**High Mill, Mill Street Cullingworth**
**Bradford West Yorkshire, BD13 5HA(GB)**

(72) Inventor: **Anderson, Alan Fyfe c/o Mainmet Ltd.**
**High Mill Mill Street Cullingworth**
**Bradford West Yorkshire BD13 5HA(GB)**

(74) Representative: **Wharton, Peter Robert et al**
**P. R. Wharton & Co. Alliance House 29-31 Kirkgate**
**Bradford West Yorkshire, BD1 1QB(GB)**

(54) **Card reader.**

(57) A compact card reader (10), for reading magnetically encoded information on a ticket or card, which comprises a single unit (12) including a pathway (14) for receiving a card to be read and a read head (18) located in the pathway. The pathway (14) is curved, or contains curved portions or humps (20), for forcing the card into contact with the read head, and the unit contains no moving parts.

EP 0 318 213 A2

# CARD READER

The invention relates to a card reader adapted to read. and optionally erase, magnetically encoded information on a ticket or card such as a ticket used on a public transport system or a credit card or identification card or similar cards containing coded information.

An object of the invention is to provide a compact self-contained device which may for example be attached to a local utility meter such as an electricity meter, a meter used in a district heating system, or a gas meter. The device may also be used in a system where recognition and identification is required, for example in fare collection or in card controlled locking systems such as are used in garages and car parks.

Our European patent publication No. 0085497 discloses a read and erase device comprising an electric drive motor, and a read head and system of drive and pinch rollers for passing a ticket or card from an entry slot to a read head, the whole device being in compact unitary self-contained form.

In accordance with the invention there is a compact card reader, for reading magnetically encoded information on a ticket or card, which comprises a single unit including a pathway for receiving a card to be read and a read head located in the pathway characterised in that the. pathway is curved and the unit contains no moving parts.

We have surprisingly found that the device even in comparison with the simple device of our above mentioned European publication 0085497, can be simplified further so as to include no moving parts whatsoever. Even the read head is not spring loaded, which is common with earlier devices of this type. This, apart from its extreme simplicity and ease of manufacture, leads to the further advantages that there are no problems in aligning of parts, the wearing of moving parts, or the adverse effect of dirt, grease and the like clogging up moving parts.

The device may also contain an erasing head or the head may in fact be a combined read/erase head, if it is desired that the card should be erased after having once been read.

The device may for instance be used in the credit card system described in our European patent publication No. 0063893 which requires a token reader to be attached to a commodity dispensing equipment such as a hot water meter employed in a district heating system.

Such systems may operate by a combination of identity cards and value cards and the device in accordance with this invention may be adapted to read both types of cards and produce an output which in turn may be used to operate a meter mechanism which supplies the appropriate quantity of the hot water or other utility being dispensed.

The device may also be used for example on the entry gate of a public transport system such as an underground railway system and may be equally adapted to and used with existing automated gates.

The pathway is curved in order to bias the card or ticket into contact with the read head. This may be accomplished, when the ticket is relatively flexible, by having a generally linear pathway containing one hump, or preferably a pair of humps, in the pathway adjacent the read head so as locally to deflect the card into contact with the read head. Alternatively, the pathway may be continuously curved with the read head being located on the outside of the curve so that the card is held in contact with the read head by its own resilience. In either case the card is pushed in to the device during which time reading takes place after which the card may be withdrawn manually from the entry slot. Alternatively, the card may be pushed in at one side of the device in an entry slot and withdrawn from the other side of the device through an exit slot. Also, the card may be read on withdrawal instead of (or as well as) on entry.

The invention will be described further, by way of example, with reference to the accompanying drawings, in which:

Figure 1 is a top plan view of one embodiment of the device in accordance with the invention;

Figure 2 is a sectional elevational view corresponding to figure 1;

Figure 3 is a similar view to figure 1 of the second embodiment; and

Figure 4 is a similar view to figure 2 of the second embodiment.

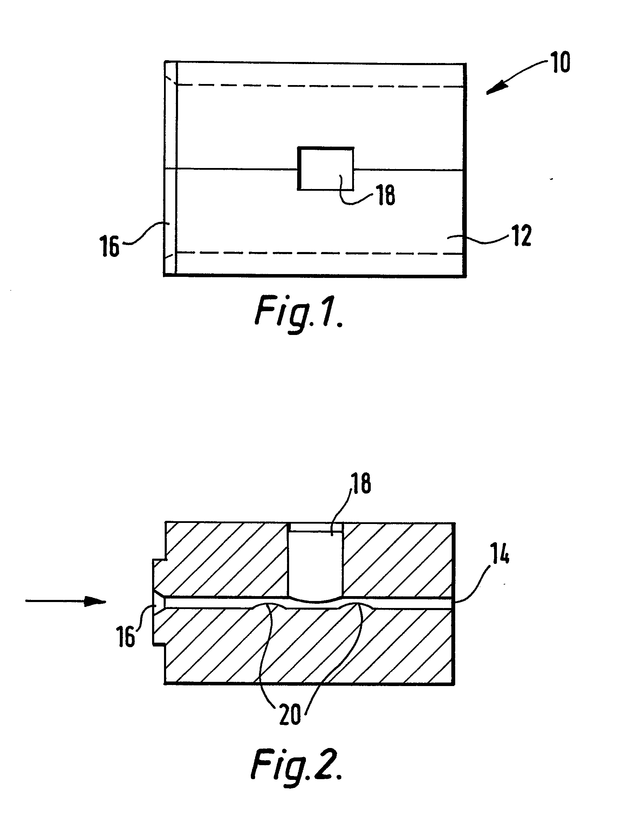

Referring to the drawings, and in particular figures 1 and 2, it can be seen that a card reader in accordance with the invention generally designated 10 comprises a body 12, for example moulded plastics material or the like.

As can be seen in figure 2 the body defines a flow path 14 for receiving a card or ticket, the flow path 14 having an entry mouth 16. Located in the flow path 14 is a read head 18. In contrast with common practice with other forms of reader the read head 18 is fixedly mounted rather than spring loaded. The flow path 14 contains a pair of humps 20 located on either side of the read head which have the effect of forming a chicane.

In operation a card or ticket is simply inserted into the mouth 16 where it will travel along the flow path 14. When it reaches the first of the humps 20 it will be bent upwardly into contact with the read head 18. The second of the humps 20 ensures that this contact is maintained. The card is simply pushed in until it reaches a stop (not shown in the drawings) after which it is withdrawn from the entry mouth 16.

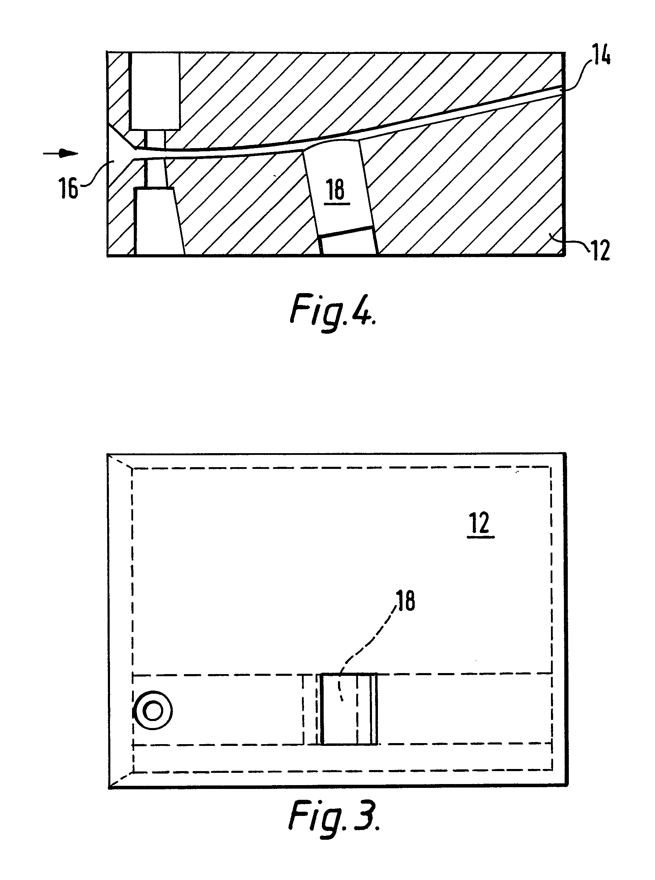

Referring now to figures 3 and 4, using like numerals for like parts, another embodiment is shown suitable for use with stiffer cards for example similar to plastic credit cards. In this the flow path 14 is continuously curved past the read head 18. Thus the natural resilience of the card causes it to bear against the read head as it is passed along the path 14. The card may be removed from the entry mouth 16, or the device may be made somewhat shorter than the length of the card so that it may be withdrawn from the opposite end of the flow path 14.

It will be seen that the device of the invention provides an extremely simple, easily made and inexpensive form of card reader which, having no moving parts to go wrong, is very reliable in operation.

## Claims

1. A compact card reader, for reading magnetically encoded information on a ticket or card, which comprises a single unit including a pathway for receiving a card to be read and a read head located in the pathway characterised in that the pathway is curved and the unit contains no moving parts.

2. A reader as claimed in claim 1 which includes an erasing head.

3. A reader as claimed in claim 1 in which the head is a combined read/erase head.

4. A reader as claimed in any of claims 1 to 3 in which the pathway is curved by the provision of one or more humps in a generally linear pathway adjacent the read head so as locally to deflect the card into contact with the read head.

5. A reader as claimed in any of claims 1 to 3 in which the pathway is continuously curved with the read head being located on the outside of the curve so that the card is held in contact with the read head by its own resilience.

6. A reader as claimed in any of claims 1 to 5 in which a card is pushed in to the device during which time reading takes place after which the card may be withdrawn manually from an entry slot.

7. A reader as claimed in any of claims 1 to 5 in which a card is pushed in at one side of the device into an entry slot and withdrawn from the other side of the device through an exit slot.

8. A reader as claimed in any of claims 1 to 7 in which the card is read read on withdrawal instead of, or as well as, on entry.

Fig.1.

Fig.2.

Fig.4.

Fig.3.